(19) Europäisches Patentamt
European Patent Office
Office européen des brevets

(11) **EP 3 037 905 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(51) Int Cl.:
***G05B 19/425*** *(2006.01)*

(21) Anmeldenummer: **15195438.5**

(22) Anmeldetag: **19.11.2015**

(54) **VORRICHTUNG UND VERFAHREN ZUM AUFNEHMEN VON POSITIONEN**

DEVICE AND METHOD FOR HOLDING WORKPIECES

DISPOSITIF ET PROCÉDÉ DESTINÉS À ENREGISTRER DES POSITIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014 DE 102014226933**

(43) Veröffentlichungstag der Anmeldung:
**29.06.2016 Patentblatt 2016/26**

(73) Patentinhaber: **KUKA Deutschland GmbH 86165 Augsburg (DE)**

(72) Erfinder:
• **SCHREIBER, Günter 86316 Friedberg (DE)**
• **ZIMMERMANN, Uwe 86152 Augsburg (DE)**

(74) Vertreter: **Heselberger, Johannes Bardehle Pagenberg Partnerschaft mbB Patentanwälte, Rechtsanwälte Prinzregentenplatz 7 81675 München (DE)**

(56) Entgegenhaltungen:
**DE-A1-102007 062 108 US-A- 4 482 968**
**US-A1- 2005 027 398 US-A1- 2012 143 371**

**Beschreibung**

**1. Gebiet der Erfindung**

Die vorliegende Erfindung betrifft eine Vorrichtung und ein Verfahren zum Aufnehmen von Positionen in ein Steuerungsprogramm eines Manipulators.

**2. Stand der Technik**

Bei der Roboterprogrammierung ist es häufig notwendig, in ein Steuerungsprogramm eines Manipulators die aktuelle Position eines bestimmten Bezugspunktes des Manipulators, beispielsweise die aktuelle Position des Werkzeugnullpunktes (TCP), aufzunehmen. Dies kann sowohl bei der Neuprogrammierung von Steuerungsprogrammen ("Teachen") als auch bei der Änderung, Anpassung oder Optimierung von Steuerungsprogrammen erfolgen. Da hier ggf. schon bestehende Positionsangaben überschrieben werden, wird das Aufnehmen von Positionen das Steuerungsprogramm auch als sog. "Touchup" bezeichnet.

Eine Position definiert einen Bezugspunkt, beispielsweise des TCP, im Raum und umfasst sowohl die Angabe der räumlichen Position als auch die Angabe der Orientierung des entsprechenden Punktes im Raum. Die Position kann daher auch als Pose des Bezugspunktes bezeichnet werden.

Das Aufnehmen von Positionen in Programmpunkte eines Steuerungsprogramms, vor allem bei den Bewegungsbefehlen LIN, PTP und CIRC, wird derzeit in der Positionsregelung auf Basis der "Soll-Position" durchgeführt. Dies erfolgt auf Grund der Reproduzierbarkeit der aufgenommen Position. Etwaige Regelfehler machen sich bei der Positionserfassung in etwa mit gleichem Einfluss bemerkbar, wie auch bei der späteren Programmabarbeitung, wodurch der absolute Positionsfehler minimiert wird. Die Soll-Position selbst wird beim Teachen oder Touchup im sogenannten "Handverfahren" mit den Bedientasten oder einer Spacemaus an einem Handbediengerät angefahren.

Moderne Robotersysteme, insbesondere Leichtbauroboter (LBR) können zudem in einem Gravitationskompensationsmodus betrieben werden, in dem der Manipulator so angesteuert wird, dass er seine eigenen Gewichtskräfte aufhebt. Der Manipulator verhält sich dann nach außen quasi schwerelos und kann beispielsweise von Hand in die gewünschte Position bewegt werden. Der Manipulator wird daher durch direkte Berührung durch den Bediener verfahren, wobei die Tasten und die Spacemaus eines Handbediengeräts keine Wirkung haben. Im Gravitationskompensationsmodus wird das Aufnehmen von Positionen auf Basis der "Ist-Position" durchgeführt. Beim Teachen oder Touchup wird daher ausschließlich die durch den Manipulator selbst gemessene Ist-Position aufgenommen, da keine Soll-Position existiert und auch nicht berechnet werden kann.

Bei der Bewegung von Hand kann zudem durch die Steuerung ein sog. "Unterraum" der Bewegung vorgegeben werden, welcher die Bewegung beschränkt. Dies bedeutet, dass die Bewegung des Manipulators von Hand nicht frei im Raum erfolgen kann, sondern durch das Robotersystem nur bestimmte Bewegungsmöglichkeiten freigegeben sind, während ansonsten die Bewegungsmöglichkeit eingeschränkt ist. Man spricht daher auch von sog. "virtual fixtures", durch die die Bewegung eingeschränkt ist. Beispielsweise kann die räumliche Orientierung des TCP im Raum als Unterraum vorgegeben sein. Dann ist es möglich, die räumliche Position des TCP manuell zu verändern, indem der Manipulator entsprechend in X-, Y- und Z-Richtung bewegt wird. Die Orientierung, also die Werte der Raumwinkel A, B und C um die Z-, Y- und X-Achse, des TCP wird jedoch von der Steuerung stets konstant gehalten. In weiteren Beispielen könnte eine bestimmte Bewegungsbahn im Raum für den TCP durch die Steuerung als Unterraum festgelegt sein. Dann könnte der Manipulator von Hand nur entlang dieser Bahn bewegt werden. Dabei befindet sich dann der TCP stets auf der vorgegebenen Bewegungsbahn. So lässt sich beispielsweise für Punktschweißaufgaben eine Bewegungsbahn vorprogrammieren auf der die Schweißpunkte zu liegen haben, wobei die genaue Position der Schweißpunkte beim Teachen oder Touchup durch den Bediener mittels manuellen Bewegens des Manipulators eingestellt wird. In anderen Beispielen könnte durch den Unterraum eine manuelle Bewegung des TCP nur in einer Fläche, einer Ebene, in einem Teilraum, entlang einer Geraden, etc. vorgegeben sein.

Moderne Robotersysteme, insbesondere LBR, ermöglichen neben der Gravitationskompensation auch die sog. Nachgiebigkeitsregelung, im Speziellen eine Steifigkeitsregelung, bei der sich der Manipulator in eine bestimmte Soll-Position bewegen soll, er sich jedoch durch einen Bediener oder ein Hindernis aus dieser Soll-Position herausbewegen lässt. Dem Manipulator ist es dabei erlaubt, im statischen Zustand eine Ist-Position einzunehmen, die sich von der Soll-Position signifikant unterscheidet. Dabei verhält sich der Manipulator nach außen als enthalte er eine Feder, die den Manipulator von der Ist-Position zur Soll-Position hinzieht. In der Steifigkeitsregelung kann die entsprechende Federkonstante darüber hinaus einstellbar sein. Durch die Steifigkeits- oder Nachgiebigkeitsregelung ist der Manipulator beispielsweise in der Lage, genau definierte Kontakt- oder Prozesskräfte auf sein Werkzeug und entsprechend auf das Werkstück aufzubringen.

US 2012/0143371 A1 beschreibt ein Verfahren zum Anpassen eines Programms zur Steuerung eines industriellen Roboters. Das Verfahren ermöglicht ein beschleunigtes Anpassen der Positionen von Zielpunkten. Dazu weist der Roboter zwei verschiedene Modi auf, einen normalen Steuerungsmodus und einen nachgiebigen Steuerungsmodus. Im Ersteren ist der Manipulator in alle Richtungen und Ausrichtungen steif, während er im zweiten Modus eine reduzierte Steifheit in zumindest eine kartesische Richtung aufweist.

US 4,482,968 zeigt ein Verfahren und eine Vorrichtung zum Steuern eines Roboters, durch welche einem Roboter Aufgaben gelernt werden können. Das Lernen von Aufgaben erfolgt mit Hilfe von Daten, wie der Arbeitsposition und der Arbeitsgeschwindigkeit.

DE 10 2007 062 108 A1 zeigt einen Industrieroboter und ein Verfahren zum Programmieren eines Industrieroboters. Der Industrieroboter wird zur Programmierung manuell geführt. Erreicht der Industrieroboter dabei eine bestimmte virtuelle Fläche, wird er durch die Steuerung bzw. die Antriebe festgesetzt und kann nicht weiter geführt werden.

US 2005/0027398 A1 zeigt einen freibeweglichen Roboter, bei dem die Art, wie der Roboter Aktionen lernt, aus einer Mehrzahl von Lernarten in einem Lernprozess ausgewählt werden kann.

Die Möglichkeiten der Nachgiebigkeitsregelung werden jedoch in der Roboterprogrammierung bisher nicht unterstützt. Es ist daher die Aufgabe der vorliegenden Erfindung eine verbesserte Vorrichtung und ein verbessertes Verfahren zum Aufnehmen von Positionen bereitzustellen, das die Nachgiebigkeitsregelung unterstützt.

## 3. Ausführliche Beschreibung der Erfindung

Die oben genannte Aufgabe wird gelöst durch eine Vorrichtung zum Aufnehmen von Positionen in ein Steuerungsprogramm eines Manipulators gemäß Anspruch 1 sowie durch ein Verfahren zum Aufnehmen von Positionen in ein Steuerungsprogramm eines Manipulators gemäß Anspruch 9.

Insbesondere wird die oben genannte Aufgabe gelöst durch eine Vorrichtung zum Aufnehmen von Positionen in ein Steuerungsprogramm eines Manipulators, aufweisend einen Manipulator, eine Steuerung mit einem Steuerungsprogramm und ein Eingabegerät, wobei die Steuerung den Manipulator in einer Nachgiebigkeitsregelung ansteuern kann, in der es dem Manipulator erlaubt ist, eine zur Soll-Position unterschiedliche Ist-Position einzunehmen, wobei die Steuerung beim Aufnehmen der aktuellen Position des Manipulators in das Steuerungsprogramm die Soll-Position in das Steuerungsprogramm übernimmt, wenn der Manipulator mittels des Eingabegeräts in die aktuelle Position gefahren wurde und wobei die Steuerung beim Aufnehmen der aktuellen Position des Manipulators in das Steuerungsprogramm die Ist-Position in das Steuerungsprogramm übernimmt, wenn der Manipulator von Hand durch einen Bediener in die aktuelle Position bewegt wurde, und wenn der Manipulator von Hand durch einen Bediener in die aktuelle Position bewegt wurde und dabei die Bewegung durch die Steuerung beschränkt war, die Steuerung beim Aufnehmen der aktuellen Position des Manipulators in das Steuerungsprogramm die durch die Beschränkung vorgegebenen Soll-Komponenten der aktuellen Position zusammen mit den durch das Verfahren des Manipulators von Hand durch einen Bediener sich ergebenden Ist-Komponenten der aktuellen Position in das Steuerungsprogramm übernimmt.

Da bei der Nachgiebigkeitsregelung die Ist-Position von der Soll-Position auseinanderfallen darf, ist zunächst nicht eindeutig, welche Position denn beim "Touchup" in das Steuerungsprogramm aufgenommen werden soll. Die Vorrichtung entscheidet nun selbsttätig und situativ, ob die Ist-Position, die Soll-Position oder eine Kombination daraus aufgenommen wird und vermeidet so Fehleingaben des Benutzers. Falls der Manipulator mittels des Eingabegeräts, beispielsweise eines Handbediengeräts, in die aktuelle Position gefahren wurde, kann der Manipulator Kontakt- oder Prozesskräfte auf sein Werkzeug und entsprechend auf das Werkstück aufbringen. Bei der Übernahme der mittels des Eingabegeräts eingestellten Position des Manipulators in das Steuerungsprogramm wird dies berücksichtigt, indem die Steuerung in diesem Fall selbsttätig die Soll-Position in das Steuerungsprogramm übernimmt. Damit werden auch beim späteren autarken Ablauf des Steuerungsprogramms sich die gewünschten Kontakt- oder Prozesskräfte ergeben.

Andererseits, wenn der Manipulator von Hand durch einen Bediener in eine gewünschte Position bewegt wurde, wird beim Teachen oder Touchup die Steuerung in diesem Fall selbsttätig die sich ergebende aktuelle Ist-Position in das Steuerungsprogramm aufnehmen. Damit wird der Manipulator diese Position auch beim späteren autarken Ablauf des Steuerungsprogramms einnehmen. Dies ist insbesondere dann vorteilhaft, wenn es auf die exakte Positionierung ohne Anwendung von Kontakt- oder Prozesskräften ankommt.

Wenn beim manuellen Bewegen des Manipulators gleichzeitig ein Unterraum der Bewegung vorgegeben ist, der die Bewegung beschränkt, wird die Steuerung selbsttätig eine hybride Position in das Steuerungsprogramm aufnehmen. Diese hybride Position umfasst die durch die Beschränkung bzw. den Unterraum vorgegebenen Soll-Komponenten der aktuellen Position und die durch das Verfahren von Hand sich ergebenden Ist-Komponenten der aktuellen Position. Damit umfasst die hybride Position einerseits die durch die Beschränkung exakt definierten Soll-Komponenten und die auf Messwerten basierenden und daher messfehlerbehafteten Ist-Komponenten. Insgesamt wird damit die Genauigkeit der übernommenen Position erhöht.

Die Vorrichtung, beispielsweise ein Robotersystem, erkennt daher anhand der vorangegangenen Art des manuellen Verfahrens des Manipulators, selbsttätig, welche Art der Position in das Steuerungsprogramm aufgenommen werden soll und speichert die entsprechende Position ab.

Bevorzugt ist die Steuerung eingerichtet, eine Sollkraft am Endeffektor des Manipulators vorzugeben und der Manipulator durch die Steuerung so zu verfahren, dass in der Ist-Position diese Sollkraft erreicht wird. Wenn der Manipulator in Kontakt mit der Umgebung gelangt, kann er in der Nachgiebigkeitsregelung eine Kraft auf die Umgebung ausüben. Mit der Steuerung ist es möglich, diese Sollkraft vorzugeben mit der der Manipulator in der Ist-Position auf die Umgebung einwirkt.

Bevorzugt ist der Manipulator eingerichtet, eine Kraft des Endeffektors des Manipulators beim Verfahren gegen ein Werkstück zu messen. Die Kontakt- oder Prozesskraft am Endeffektor kann beim Verfahren des Manipulators sowohl mittels des Handbediengeräts als auch beim Verfahren von Hand unmittelbar gemessen werden. Dies kann beispielsweise vorteilhaft sein, wenn der Manipulator ein Bearbeitungswerkzeug, beispielsweise ein Schleifgerät trägt, das mit einer bestimmten Kraft auf die zu bearbeitende Oberfläche gedrückt werden soll. Dann kann der Bediener diese Kraft manuell aufbringen, die dann gemessen und im Steuerungsprogramm zu der entsprechenden Ist-Position abgespeichert wird.

Bevorzugt ist die Steuerung eingerichtet, für eine Ist-Position eine gewünschte Sollkraft in das Steuerungsprogramm aufzunehmen. Damit kann der Manipulator von Hand in die gewünschte Ist-Position in Kontakt mit dem Werkstück bewegt werden und dann beispielsweise mittels der Handsteuerung oder durch manuelles Kraftaufbringen vorgegeben werden, welche Kraft der Manipulator auf das Werkstück ausüben soll. So lassen sich für beliebige Ist-Positionen Kontakt- oder Prozesskräfte abspeichern, die der Manipulator beim späteren autarken Ablauf des Steuerungsprogramms an der jeweiligen Stelle ausüben soll.

Bevorzugt ist in der Nachgiebigkeitssteuerung eine vom Manipulator ausgeübte Kraft proportional zur Differenz von Soll-Position und Ist-Position. Damit verhält sich der Manipulator nach dem Federgesetz, wobei die auf die Umgebung ausgeübte Kraft genau definiert werden kann.

Bevorzugt ist der Proportionalitätsfaktor für die Erzeugung der Kraft aufgrund der Differenz von Soll-Position und Ist-Position variabel von der Steuerung einstellbar. Die Steuerung kann die virtuelle Federkonstante vorgeben, den Manipulator steifer oder weicher regeln und so die vom Manipulator auf die Umgebung aufgebrachte Kraft bezogen auf die Differenz von Soll-Position und Ist-Position genau einstellen.

Bevorzugt ist die Steuerung eingerichtet, verschiedenste Richtungen der Kräfte, in welche diese wirken sollen, aufzunehmen und zu speichern. Insbesondere kann die Richtung der aufzunehmenden Kraft, in welche diese wirken soll, aufgenommen und gespeichert werden. Ebenso ist es möglich, dass Kraftverläufe und deren Richtungen aufgenommen und gespeichert werden. Beispielsweise könnte so zunächst eine Kraft in Z-Richtung vorgegeben, aufgenommen bzw. gespeichert werden, welche sich jedoch in einem zeitlichen Verlauf ändert. Hierbei kann die Richtung und auch die Größe der Kraft geändert werden bzw. änderbar sein. Hierbei kann bevorzugt die Position bzw. Pose des Endeffektors und/oder des Manipulators unverändert bleiben, sich jedoch auch verändern, also eine Bewegung ausgeführt werden, während auch die aufgebrachte Kraft geändert wird.

Insbesondere wird die oben genannte Aufgabe auch gelöst durch ein Verfahren zum Aufnehmen von Positionen in ein Steuerungsprogramm eines Manipulators, aufweisend die folgenden Schritte:

a. Steuern eines Manipulators in einer Nachgiebigkeitsregelung, in der es dem Manipulator erlaubt ist, eine zu einer Soll-Position unterschiedliche Ist-Position einzunehmen;

b. Aufnehmen der aktuellen Soll-Position in das Steuerungsprogramm, wenn der Manipulator mittels eines Eingabegeräts, insbesondere eines Handbediengeräts, in die aktuelle Position gefahren wurde; und

c. Aufnehmen der aktuellen Ist-Position in das Steuerungsprogramm, wenn der Manipulator von Hand durch einen Bediener in die aktuelle Position bewegt wurde; und

d. wenn der Manipulator von Hand durch einen Bediener in die aktuelle Position bewegt wurde und dabei die Bewegung durch die Steuerung beschränkt war, Aufnehmen der aktuellen Position des Manipulators in das Steuerungsprogramm mit durch die Beschränkung vorgegebenen Soll-Komponenten der aktuellen Position und den durch das Verfahren des Manipulators von Hand durch einen Bediener sich ergebenden Ist-Komponenten der aktuellen Position.

Mit Hilfe dieses Verfahrens kann eine Vorrichtung, beispielsweise ein Robotersystem, anhand der vorangegangenen Art des manuellen Verfahrens des Manipulators, selbsttätig erkennen, welche Art der Position in das Steuerungsprogramm aufgenommen werden soll und speichert die entsprechende Position ab. Dabei wird berücksichtigt, dass der Manipulator in der Nachgiebigkeitsregelung eine von der Soll-Position unterschiedliche Ist-Position einnehmen kann und dann eine Kraft auf die Umgebung ausüben kann.

Bevorzugt weist das Verfahren weiterhin die folgenden Schritte auf:

- Vorgeben einer Sollkraft am Endeffektor des Manipulators; und
- Verfahren des Manipulators so, dass in der Ist-Position diese Sollkraft erreicht wird.

Hiermit kann beispielsweise mittels des Eingabegeräts bzw. Handbediengeräts eine Sollkraft direkt vorgegeben werden, die der Manipulator in einer jeweiligen Ist-Position auf die Umgebung ausüben soll. Die Ist-Position kann dann von Hand durch Bewegen des Manipulators durch den Bediener eingestellt werden.

Bevorzugt weist das Verfahren weiterhin den folgenden Schritt auf:

- Messen einer Kraft des Endeffektors des Manipulators beim Verfahren gegen ein Werkstück.

Die Sollkraft kann auch unmittelbar gemessen werden, wenn der Bediener den Manipulator per Hand bewegt und dabei beim Touchup eine Kraft auf die Umgebung ausübt.

Bevorzugt weist das Verfahren weiterhin den folgenden Schritt auf:

- Aufnehmen der Sollkraft zu der entsprechenden Ist-Position in das Steuerungsprogramm durch die Steuerung.

Damit kann die Sollkraft zu der entsprechenden Ist-Position in dem Steuerungsprogramm abgelegt werden und beim späteren autarken Ablauf des Steuerungsprogramms an der jeweiligen Stelle durch den Manipulator wieder auf die Umgebung aufgebracht werden.

**4. Kurze Beschreibung der Zeichnungen**

Im Folgenden werden bevorzugte Ausführungsformen der Erfindung unter Bezugnahme auf die Zeichnungen im Detail erläutert. Hierbei zeigt:

Fig. 1  eine schematische Darstellung einer beispielhaften Vorrichtung zum Aufnehmen von Positionen in ein Steuerungsprogramm eines Manipulators und ein Werkstück; und

Fig. 2  ein Ablaufdiagramm eines beispielhaften Verfahrens zum Aufnehmen von Positionen in ein Steuerungsprogramm eines Manipulators.

**5. Beschreibung von bevorzugten Ausführungsformen**

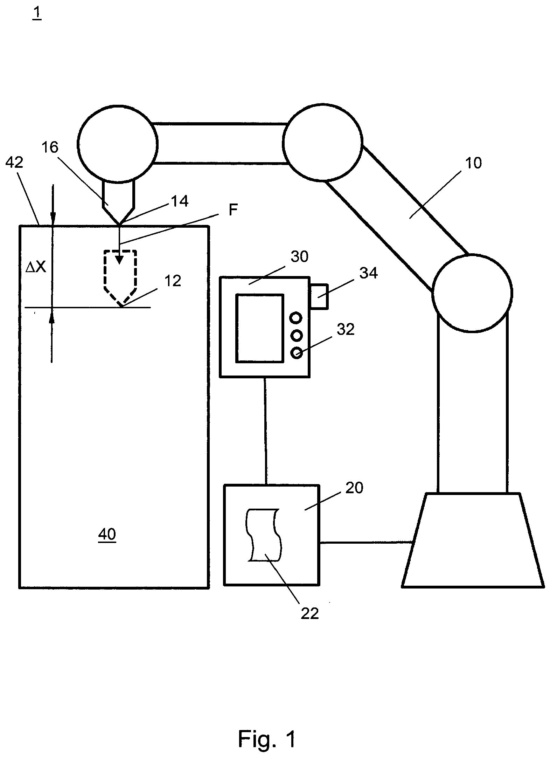

Fig. 1 zeigt eine Vorrichtung 1 zum Aufnehmen von Positionen 12, 14 in ein Steuerungsprogramm 22 eines Manipulators 10 bei Kontakt mit einem Werkstück 40. Die Vorrichtung 1 umfasst einen Manipulator 10, der durch eine Steuerung 20 angesteuert wird, die durch einen Bediener (nicht dargestellt) mittels eines Eingabegeräts 30, beispielsweise eines Handbediengeräts, angesprochen oder programmiert werden kann.

Der Manipulator 10 umfasst weiterhin mehrere bewegliche und motorisch ansteuerbare Achsen und einen Endeffektor 16. Der Endeffektor 16 kann beispielsweise ein Greifer, Sauger oder ein anderes Werkzeug sein, mit dem der Manipulator 10 beispielsweise Gegenstände bewegt oder bearbeitet. Insbesondere kann der Endeffektor 16 ein Werkzeug sein, etwa eine Schleifmaschine, mit dem das Werkstück 40 bearbeitet werden kann.

Das Eingabegerät 30 kann eine Spacemaus 34 und/oder Tasten 32 aufweisen, mit denen der Manipulator 10 durch den Bediener an eine gewünschte Position verfahren und programmiert werden kann.

Der Manipulator 10 kann ein sogenannter Leichtbauroboter (LBR) sein, der insbesondere für Montagetätigkeiten und leichtere Bearbeitungsvorgänge geeignet ist. Interne Kraftsensoren im Leichtbauroboter ermöglichen durch Überwachung der auftretenden Kräfte eine sichere Mensch-Roboter-Kooperation.

Insbesondere kann die Steuerung 20 den Manipulator 10 in der Nachgiebigkeitssteuerung, insbesondere in einer kartesischen Nachgiebigkeitssteuerung, ansteuern, wobei es dem Manipulator 10 erlaubt ist, im statischen Zustand eine Ist-Position 14 einzunehmen, die sich von der Soll-Position 12 signifikant unterscheidet. In Fig. 1 ist beispielhaft dargestellt, dass der TCP des Endeffektors 16 an der oberen Fläche 42 des Werkstücks 40 an der Ist-Position 14 ansteht, wobei die Soll-Position 12, um die Distanz ΔX nach unten versetzt, sich innerhalb des Werkstücks 40 befindet. Zur Verdeutlichung ist der in der Soll-Position 12 befindliche Endeffektor 16 gestrichelt eingezeichnet. Wäre das Werkstück 40 nicht vorhanden, würde der Manipulator 10 die Sollposition 12 einnehmen.

In der in Fig. 1 dargestellten Situation übt der Manipulator 10 mit dem Endeffektor 16 eine Kraft F auf die obere Fläche 42 des Werkstücks 40 auf. Dabei verhält sich der Manipulator 10 nach außen als enthalte er eine Feder, die den Manipulator 10 von der Ist-Position 14 zur Soll-Position 12 hinzieht. Die Kraft F berechnet sich nach dem Federgesetz:

$$F = c * (X_{Soll} - X_{Ist}) = c * \Delta X$$

In der Steifigkeitsregelung kann die Federkonstante c darüber hinaus durch die Steuerung 20 einstellbar sein. So ist der Manipulator 10 in der Lage in der Steifigkeits- oder Nachgiebigkeitsregelung genau definierte Kontakt- oder Prozesskräfte F auf seinen Endeffektor 16, beispielsweise ein Werkzeug, und entsprechend auf das Werkstück 40 aufzubringen.

Beim Teachen oder Touchup werden aktuelle Positionen des Manipulators 10 in ein Steuerungsprogramm 22 des Manipulators 10 übernommen. Hierbei kann der Manipulator 10 klassisch entweder mittels des Eingabegeräts 30 in die gewünschte Position verfahren werden oder von Hand durch den Bediener in die gewünschte Position bewegt werden. Die Information über die Bewegungsart wird von der Steuerung 20 registriert.

Wenn der Manipulator 10 mit dem Eingabegerät 30 mittels einer Spacemaus 34 oder mittels von Tasten 32 an eine gewünschte Position verfahren wird, und dann ein Teachen oder Touchup erfolgen soll, übernimmt die Steuerung 20 die aktuelle Soll-Position 12 in das Steuerungsprogramm 22. Damit lässt sich per Tastendruck oder Mausbewegung auch die Kraft F einstellen, mit der der Manipulator 10 auf die Umwelt, hier das Werkstück 40, einwirken soll.

Im in Fig. 1 dargestellten Beispiel wird der Manipulator 10 zunächst zur Position 14 gefahren, bei der der Endeffektor 16 die obere Fläche 42 des Werkstücks 40 gerade berührt. In dieser Stellung übt der Manipulator 10 noch keine Kraft F auf das Werkstück 40 aus. Der Bediener kann nun beispielsweise mittels der Spacemaus 34 oder einer -Achse-Verfahrtaste, hier bevorzugt der Z Verfahrtaste, am Eingabegerät 30 den Manipulator 10 virtuell in -Z Richtung zur Soll-Position 12 verfahren, wobei der Endeffektor 16 jedoch nicht in das Werkstück 40 eindringt, sondern in der Ist-Position 14 verbleibt. Durch das virtuelle Verfahren wird der Manipulator nun "vorgespannt" und übt eine genau definierte und nach dem Federgesetz berechenbare Kraft F auf das Werkstück 40 aus. Mit dem Teachen oder Touchup der Soll-Position 12 wird somit, bei definierter Federkonstante c, implizit auch die Kraft F in das Steuerungsprogramm 22 aufgenommen.

Alternativ zum virtuellen Verfahren des Manipulators 10 um eine Kraft F aufzubringen, kann der Manipulator auch zur Ist-Position 14 gefahren oder manuell hinbewegt werden und anschließend über das Eingabegerät 30 eine dort gewünschte Sollkraft $F_{Soll}$ vorgegeben werden. Dann wird der Manipulator 10 entsprechend dieser Sollkraft $F_{Soll}$ virtuell gegen das Werkstück bewegt bzw. vorgespannt, so dass sich die gewünschte Sollkraft $F_{Soll}$ einstellt. Der Verfahrweg ist wiederum über das Federgesetz vorgegeben. Auch in diesem Fall wird beim Teachen oder Touchup die sich aus der Sollkraft $F_{Soll}$ ergebende Soll-Position 12 in das Steuerungsprogramm 22 aufgenommen und somit bei definierter Federkonstante c implizit auch die Kraft F mitgespeichert. Hierbei kann der Bediener bevorzugt ebenso eine Richtung oder Richtungskurve für die Kraft F bzw. Sollkraft $F_{Soll}$ vorgeben, in welche diese wirken soll.

Alternativ kann im Fall der Kraftvorgabe auch die Ist-Position 14 und die gewünschte Kraft $F_{Soll}$ abgespeichert werden und die Steuerung 20 daraus dann beim späteren autarken Ablauf des Steuerungsprogramms 22 die erforderliche Sollposition 12 anhand des Federgesetzes berechnen.

Wenn der Manipulator 10 von Hand durch einen Bediener an eine gewünschte Position verfahren wird, und dann ein Teachen oder Touchup erfolgen soll, übernimmt die Steuerung 20 die aktuelle Ist-Position 14 in das Steuerungsprogramm 22. Hierbei geht die Steuerung davon aus, dass der Bediener mit dem Manipulator 10 in der Regel keine Kraft auf die Umgebung ausüben möchte. Wenn der Manipulator 10 jedoch dazu eingerichtet ist, eine Kraft F des Endeffektors 16 beim Verfahren gegen ein Werkstück 40 zu messen, kann beim Teachen oder Touchup zu der aktuellen Ist-Position 14 auch die gemessene Kraft F als Sollkraft $F_{Soll}$ in das Steuerungsprogramm 22 aufgenommen werden.

Es ist weiterhin auch möglich, dass beim Teachen oder Touchup der Endeffektor 16 die manuelle Bewegungsmöglichkeit des TCP durch einen Unterraum der Bewegung beschränkt wurde. Beispielsweise könnte der TCP in Z-Richtung so mittels des Eingabegeräts 30 verfahren werden, dass er eine definierte Kraft F auf das Werkstück 40 ausübt. Diese Z-Komponente soll in der Folge auch bei einer manuellen Bewegung exakt beibehalten werden. Auch die Ausrichtung des TCPs bzw. Werkzeugs könnte exakt vorgegeben werden. Dann könnte die Bewegung des Manipulators in der X-Y-Ebene der oberen Fläche 42 freigegeben werden und der Manipulator vom Bediener von Hand in dieser X-Y-Ebene bewegt werden. Bei einem nachfolgenden Teachen oder Touchup wird nun eine hybride Position in das Steuerungsprogramm 22 aufgenommen, die sich aus der exakt festgelegten Z-Komponente, den exakt festgelegten Raumwinkeln A, B und C, also den Soll-Komponenten, und den aus den Messwerten für die X- und Y-Komponente, also den Ist-Komponenten, zusammensetzt.

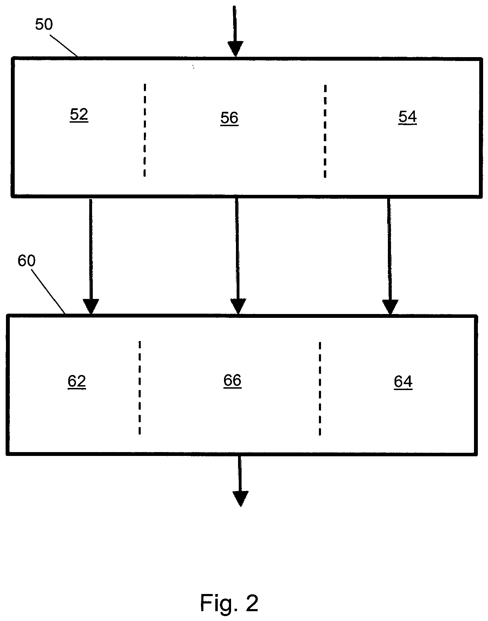

Fig. 2 verdeutlicht ein beispielhaftes Verfahren zum Aufnehmen von Positionen 12, 14 in ein Steuerungsprogramm 22 eines Manipulators 10 anhand eines Ablaufdiagramms.

In einem Schritt 50 wird der Manipulator 10 in der Nachgiebigkeitsregelung gesteuert, in der es dem Manipulator 10 erlaubt ist, eine zu einer Soll-Position 12 unterschiedliche Ist-Position 14 einzunehmen. Der Manipulator 10 kann dabei entweder im Teilschritt 52 mittels eines Eingabegeräts 30 in die aktuelle Position gefahren werden, oder im Teilschritt 54 von Hand durch den Bediener in die aktuelle Position bewegt werden.

Beim Teachen oder Touchup wird in einem Schritt 60 die aktuelle Position in das Steuerungsprogramm 22 aufgenommen, wobei in Teilschritt 62 die Soll-Position 12 aufgenommen wird, wenn der Manipulator 10 mittels des Eingabegeräts 30 in die aktuelle Position gefahren wurde. In einem dazu alternativen Teischritt 62 wird die aktuelle Ist-Position 14 in das Steuerungsprogramm 22 aufgenommen, wenn der Manipulator 10 von Hand durch einen Bediener in die aktuelle Position bewegt wurde. Wiederum alternativ kann in einem Teilschritt 66 eine hybride Position aus Soll- und Ist-Komponenten in das Steuerungsprogramm 22 aufgenommen werden, wenn der Manipulator 10 von Hand durch einen Bediener in die aktuelle Position bewegt wurde und dabei die Bewegung durch die Steuerung 20 beschränkt war.

**Bezugszeichenliste:**

| | |
|---|---|
| 1 | Vorrichtung |
| 10 | Manipulator |
| 12 | Soll-Position |
| 14 | Ist-Position |
| 16 | Endeffektor |
| 20 | Steuerung |
| 22 | Steuerungsprogramm |
| 30 | Eingabegerät |
| 32 | Tasten |
| 34 | Spacemaus |

40 Werkstück
42 obere Fläche
50 Steuerungsschritt in Nachgiebigkeitsregelung
52 Verfahren mittels Handbediengerät
54 Bewegen von Hand
60 Aufnehmen der Position
62 Aufnehmen der Soll-Position
64 Aufnehmen der Ist-Position
66 Aufnehmen einer hybriden Position

**Patentansprüche**

1. Vorrichtung (1) zum Aufnehmen von Positionen (12, 14) in ein Steuerungsprogramm (22) eines Manipulators (10), aufweisend

    a. einen Manipulator (10);
    b. eine Steuerung (20) mit einem Steuerungsprogramm (22); und
    c. ein Eingabegerät (30);
    d. wobei die Steuerung (20) den Manipulator (10) in einer Nachgiebigkeitsregelung ansteuert, in der es dem Manipulator (10) erlaubt ist, eine zur Soll-Position (12) unterschiedliche Ist-Position (14) einzunehmen; **dadurch gekennzeichnet, dass**
    e. die Steuerung (20) beim Aufnehmen der aktuellen Position des Manipulators (10) in das Steuerungsprogramm (22) die Soll-Position (12) in das Steuerungsprogramm (22) übernimmt, wenn der Manipulator (10) mittels des Eingabegeräts (30) in die aktuelle Position gefahren wurde; und
    f. wobei die Steuerung (20) beim Aufnehmen der aktuellen Position des Manipulators (10) in das Steuerungsprogramm (22) die Ist-Position (14) in das Steuerungsprogramm (22) übernimmt, wenn der Manipulator (10) von Hand durch einen Bediener in die aktuelle Position bewegt wurde; und
    g. wenn der Manipulator (10) von Hand durch einen Bediener in die aktuelle Position bewegt wurde und dabei die Bewegung durch die Steuerung (20) beschränkt war, die Steuerung (20) beim Aufnehmen der aktuellen Position des Manipulators (10) in das Steuerungsprogramm (22) die durch die Beschränkung vorgegebenen Soll-Komponenten der aktuellen Position zusammen mit den durch das Verfahren des Manipulators (10) von Hand durch einen Bediener sich ergebenden Ist-Komponenten der aktuellen Position in das Steuerungsprogramm (22) übernimmt.

2. Vorrichtung nach Anspruch 1, wobei die Steuerung (20) eingerichtet ist, eine Sollkraft ($F_{Soll}$) an einem Endeffektor (16) des Manipulators (10) vorzugeben und den Manipulator (10) durch die Steuerung (20) so zu verfahren, dass in der Ist-Position (14) diese Sollkraft ($F_{Soll}$) erreicht wird.

3. Vorrichtung nach einem der Ansprüche 1 oder 2, wobei der Manipulator (10) eingerichtet ist, eine Kraft (F) des Endeffektors (16) des Manipulators (10) beim Verfahren gegen ein Werkstück (40) zu messen.

4. Vorrichtung nach einem der Ansprüche 2 oder 3, wobei die Steuerung (20) eingerichtet ist, die Sollkraft ($F_{Soll}$) zu der entsprechenden Ist-Position (14) in das Steuerungsprogramm (22) aufzunehmen.

5. Vorrichtung nach einem der vorherigen Ansprüche, wobei in der Nachgiebigkeitssteuerung eine vom Manipulator (10) ausgeübte Kraft (F) proportional zur Differenz von Soll-Position (12) und Ist-Position (14) ist.

6. Vorrichtung nach Anspruch 5, wobei ein Proportionalitätsfaktor (c) für die Erzeugung der Kraft (F) aufgrund der Differenz von Soll-Position (12) und Ist-Position (14) variabel von der Steuerung (20) einstellbar ist.

7. Vorrichtung nach einem der vorherigen Ansprüche 2 - 6, wobei die Steuerung (20) eingerichtet ist, Richtungen von Kräften (F, $F_{Soll}$), in welche diese wirken sollen, aufzunehmen und zu speichern.

8. Vorrichtung nach einem der vorherigen Ansprüche 2 - 7, wobei die Steuerung (20) eingerichtet ist, Kraftverläufe und deren Richtungen aufzunehmen und zu speichern.

9. Verfahren zum Aufnehmen von Positionen (12, 14) in ein Steuerungsprogramm (22) eines Manipulators (10), aufweisend den Schritt:

    a. Steuern eines Manipulators (10) in einer Nachgiebigkeitsregelung, in der es dem Manipulator (10) erlaubt ist, eine zu einer Soll-Position (12) unterschiedliche Ist-Position (14) einzunehmen; wobei das Verfahren **gekennzeichnet ist durch**:
    b. Aufnehmen der aktuellen Soll-Position (12) in das Steuerungsprogramm (22), wenn der Manipulator (10) mittels eines Eingabegeräts (30) in die aktuelle Position gefahren wurde; und
    c. Aufnehmen der aktuellen Ist-Position (14) in das Steuerungsprogramm (22), wenn der Manipulator (10) von Hand **durch** einen Bediener in die aktuelle Position bewegt wurde und
    d. wenn der Manipulator (10) von Hand **durch** einen Bediener in die aktuelle Position bewegt wurde und dabei die Bewegung **durch** die Steuerung (20) beschränkt war, Aufnehmen der aktuellen Position des Manipulators (10) in das Steuerungsprogramm (22) mit **durch** die Beschränkung vorgegebenen Soll-Komponenten der aktuellen Position und den **durch** das Verfahren des Manipulators (10) von Hand **durch** einen Bediener sich ergebenden Ist-Komponenten der aktuellen Position.

10. Verfahren nach Anspruch 9, weiterhin aufweisend die folgenden Schritte:

- Vorgeben einer Sollkraft ($F_{Soll}$) an einem Endeffektor (16) des Manipulators (10); und
- Verfahren des Manipulators (10) so, dass in der Ist-Position (14) diese Sollkraft ($F_{Soll}$) erreicht wird.

11. Verfahren nach Anspruch 10, weiterhin aufweisend den folgenden Schritt:

- Messen einer Kraft ($F_{Soll}$) des Endeffektors (16) des Manipulators (10) beim Verfahren gegen ein Werkstück (40).

12. Verfahren nach einem der Ansprüche 10 oder 11, weiterhin aufweisend den folgenden Schritt:

- Aufnehmen der Sollkraft (F) zu der entsprechenden Ist-Position (14) in das Steuerungsprogramm (22) durch die Steuerung (20).

13. Verfahren nach einem der vorherigen Ansprüche 10 bis 12, wobei in der Nachgiebigkeitssteuerung eine vom Manipulator (10) ausgeübte Kraft (F) proportional zur Differenz von Soll-Position (12) und Ist-Position (14) ist.

14. Verfahren nach Anspruch 13, wobei der Proportionalitätsfaktor (c) für die Erzeugung der Kraft (F) aufgrund der Differenz von Soll-Position (12) und Ist-Position (14) variabel von der Steuerung (20) einstellbar ist.

## Claims

1. An apparatus (1) for recording positions (12, 14) in a control program (22) of a manipulator (10), comprising

   a. a manipulator (10);
   b. a controller (20) having a control program (22); and
   c. an input device (30);
   d. wherein the controller (20) actuates the manipulator (10) in a compliance control, in which the manipulator (10) is allowed to occupy an actual position (14) different to the nominal position (12); **characterized in that**
   e. the controller (20), when recording the current position of the manipulator (10) in the control program (22), carries over the nominal position (12) into the control program (22) if the manipulator (10) was moved by means of the input device (30) into the current position; and
   f. wherein the controller (20), when recording the current position of the manipulator (10) in the control program (22), carries over the actual position (14) into the control program (22) if the manipulator (10) was manually moved by a user into the current position; and
   g. if the manipulator (10) was manually moved by a user into the current position and the movement was limited by the controller (20), when recording the current position of the manipulator (10) in the control program (22), the controller (20) carries over into the control program (22) the nominal components of the current position defined by the limitation together with the actual components of the current position generated by the manual movement of the manipulator (10) by a user.

2. The apparatus according to claim 1, wherein the controller (20) is configured to define a nominal force ($F_{nominal}$) at an end effector (16) of the manipulator (10) and to move the manipulator (10) by means of the controller (20) in such a way that this nominal force ($F_{nominal}$) is obtained in the actual position (14).

3. The apparatus according to any one of claims 1 or 2, wherein the manipulator (10) is configured to measure a force (F) of the end effector (16) of the manipulator (10) when it is moved onto a workpiece (40).

4. The apparatus according to any one of claims 2 or 3, wherein the controller (20) is configured to record in the control program (22) the nominal force ($F_{nominal}$) for the corresponding actual position (14).

5. The apparatus according to any one of the preceding claims, wherein, in the compliance control, a force (F) applied by the manipulator (10) is proportional to the difference between nominal position (12) and actual position (14).

6. The apparatus according to claim 5, wherein a proportionality factor (c) for the generation of the force (F) on the basis of the difference between nominal position (12) and actual position (14) is variably adjustable by the controller (20).

7. The apparatus according to any one of the preceding claims 2 to 6, wherein the controller (20) is configured to record and to store directions in which forces (F,

F$_{nominal}$) are to act.

**8.** The apparatus according to any one of the preceding claims 2 to 7, wherein the controller (20) is configured to record and to store force lines and their directions.

**9.** A method for recording positions (12, 14) in a control program (22) of a manipulator (10), comprising the following step:

    a. Controlling of a manipulator (10) in a compliance control, in which the manipulator (10) is allowed to occupy an actual position (14) different to a nominal position (12); wherein the method is **characterized by**:
    b. Recording of the current nominal position (12) in the control program (22) if the manipulator (10) was moved by means of an input device (30) into the current position; and
    c. Recording of the current actual position (14) in the control program (22) if the manipulator (10) was manually moved by a user into the current position; and
    d. if the manipulator (10) was manually moved by a user into the current position and the movement was limited by the controller (20), recording of the current position of the manipulator (10) in the control program (22) using nominal components of the current position defined by the limitation and the actual components of the current position generated by the manual movement of the manipulator (10) by a user.

**10.** The method according to claim 9, additionally including the following steps:

    - Defining of a nominal force (F$_{nominal}$) at an end effector (16) of the manipulator (10); and
    - Moving of the manipulator (10) in such a way that this nominal force (F$_{nominal}$) is obtained in the actual position (14).

**11.** The method according to claim 10, further comprising the following step:

    - Measuring of a force (F$_{nominal}$) of the end effector (16) of the manipulator (10) when it is moved onto a workpiece (40).

**12.** The method according to any one of claims 10 or 11, further comprising the following step:

    - Recording of the nominal force (F) at the corresponding actual position (14) in the control program (22) by the controller (20).

**13.** The method according to any one of the preceding claims 10 to 12, wherein, in the compliance control, a force (F) applied by the manipulator (10) is proportional to the difference between nominal position (12) and actual position (14).

**14.** The method according to claim 13, wherein the proportionality factor (c) for the generation of the force (F) on the basis of the difference between nominal position (12) and actual position (14) is variably adjustable by the controller (20).

**Revendications**

**1.** Dispositif (1) pour enregistrer des positions (12, 14) dans un programme de commande (22) d'un manipulateur (10), comprenant

    a. un manipulateur (10) ;
    b. une commande (20) avec un programme de commande (22) ; et
    c. un appareil d'entrée (30) ;
    d. la commande (20) commandant le manipulateur (10) selon une régulation de compliance, dans laquelle le manipulateur (10) est autorisé à adopter une position réelle (14) différente de la position de consigne (12) ; **caractérisé en ce que**
    e. lors de l'enregistrement de la position présente du manipulateur (10) dans le programme de commande (22), la commande (20) reprend la position de consigne (12) dans le programme de commande (22) lorsque le manipulateur (10) a été amené dans la position présente au moyen de l'appareil d'entrée (30) ; et
    f. dans lequel lors de l'enregistrement de la position présente du manipulateur (10) dans le programme de commande (22) la commande (20) reprend la position réelle (14) dans le programme de commande (22) lorsque le manipulateur (10) a été déplacé manuellement par un opérateur dans la position présente ; et
    g. lorsque le manipulateur (10) a été déplacé manuellement par un opérateur dans la position présente et que le mouvement a été limité par la commande (20), la commande (20) reprend dans le programme de commande (22), lors de l'enregistrement de la position présente du manipulateur (10) dans le programme de commande (22), les composantes de consigne de la position présente prescrites par la limitation, conjointement avec les composantes réelles de la position présente issues du déplacement manuel du manipulateur (10) par un opérateur.

**2.** Dispositif selon la revendication 1, dans lequel la commande (20) est agencée pour prescrire une force de consigne (F$_{Soll}$) à un effecteur terminal (16) du manipulateur (10) et pour déplacer le manipulateur (10) par l'intermédiaire de la commande (20), de façon que, dans la position réelle (14), cette force de consigne ($F_{Soll}$) soit atteinte.

3. Dispositif selon l'une des revendications 1 ou 2, dans lequel le manipulateur (10) est agencé pour mesurer une force (F) de l'effecteur terminal (16) du manipulateur (10) lors d'un déplacement contre une pièce (40).

4. Dispositif selon l'une des revendications 2 ou 3, dans lequel la commande (20) est agencée pour enregistrer dans le programme de commande (22) la force de consigne ($F_{Soll}$) dans la position réelle correspondante (14).

5. Dispositif selon l'une des revendications précédentes, dans lequel dans la commande de compliance une force (F) exercée par le manipulateur (10) est proportionnelle à la différence entre la position de consigne (12) et la position réelle (14).

6. Dispositif selon la revendication 5, dans lequel un facteur de proportionnalité (c) pour la production de la force (F) est réglable de manière variable par la commande (20) sur la base de la différence entre la position de consigne (12) et la position réelle (14).

7. Dispositif selon l'une des revendications précédentes 2 à 6, dans lequel la commande (20) est agencée pour enregistrer et stocker des directions de forces (F, $F_{Soll}$) dans lesquelles celles-ci agissent.

8. Dispositif selon l'une des revendications précédentes 2 à 7, dans lequel la commande (20) est agencée pour enregistrer et stocker des variations de forces et leurs directions.

9. Procédé pour enregistrer des positions (12, 14) dans un programme de commande (22) d'un manipulateur (10), comprenant l'étape consistant à :

    a. commander un manipulateur (10) selon une régulation de compliance, dans laquelle le manipulateur (10) est autorisé à adopter une position réelle (14) différente d'une position de consigne (12) ; le procédé étant **caractérisé par** :
    b. un enregistrement de la position de consigne présente (12) dans le programme de commande (22) lorsque le manipulateur (10) a été déplacé dans la position présente au moyen d'un appareil d'entrée (30) ; et
    c. un enregistrement de la position réelle présente (14) dans le programme de commande (22) lorsque le manipulateur (10) a été déplacé manuellement par un opérateur dans la position présente et
    d. lorsque le manipulateur (10) a été déplacé manuellement par un opérateur dans la position présente et que le mouvement a été limité par la commande (20), un enregistrement de la position présente du manipulateur (10) dans le programme de commande (22) avec des composantes de consigne de la position présente prescrites par la limitation et avec des composantes réelles de la position présente issues du déplacement manuel du manipulateur (10) par un opérateur.

10. Dispositif selon la revendication 9, comprenant également les étapes suivantes :

    - prescription d'une force de consigne ($F_{Soll}$) à un effecteur terminal (16) du manipulateur (10) ; et
    - prescription du manipulateur (10) de façon que, dans la position réelle (14), cette force de consigne ($F_{Soll}$) soit atteinte.

11. Procédé selon la revendication 10, comprenant également l'étape suivante :

    - mesure d'une force ($F_{Soll}$) de l'effecteur terminal (16) du manipulateur (10) lors du déplacement contre une pièce (40).

12. Procédé selon l'une des revendications 10 ou 11, comprenant également l'étape suivante :

    - enregistrement, dans le programme de commande (22), de la force de consigne (F) dans la position réelle correspondante (14) par la commande (20).

13. Procédé selon l'une des revendications précédentes 10 à 12, dans lequel dans la commande de compliance une force (F) exercée par le manipulateur (10) est proportionnelle à la différence entre la position de consigne (12) et la position réelle (14).

14. Procédé selon la revendication 13, dans lequel le facteur de proportionnalité (c) pour la production de la force (F) est réglable de manière variable par la commande (20) sur la base de la différence entre la position de consigne (12) et la position réelle (14).

Fig. 1

50

| 52 | 56 | 54 |

60

| 62 | 66 | 64 |

Fig. 2

**EP 3 037 905 B1**

**IN DER BESCHREIBUNG AUFGEFÜHRTE DOKUMENTE**

**In der Beschreibung aufgeführte Patentdokumente**

- US 20120143371 A1
- US 4482968 A
- DE 102007062108 A1
- US 20050027398 A
- US A1 A